# EUROPÄISCHE PATENTSCHRIFT

(11) **EP 3 246 589 B1**
(45) Veröffentlichungstag und Bekanntmachung des Hinweises auf die Patenterteilung: **25.03.2020**
(21) Anmeldenummer: 17169195.9
(22) Anmeldetag: 03.05.2017
(51) Int. Cl.: F16D 65/12

(54) **BREMSSCHEIBE UND BREMSSYSTEM**
BRAKE DISC AND BRAKING SYSTEM
DISQUE DE FREIN ET SYSTÈME DE FREINAGE

(30) Priorität: 19.05.2016 DE 102016109183
(43) Veröffentlichungstag der Anmeldung: 22.11.2017
(73) Patentinhaber: SAF-HOLLAND GmbH, 63856 Bessenbach (DE)
(72) Erfinder: HARTMANN, Mark, 63834 Sulzbach am Main (DE); BRUNSCH, Bernd, 63303 Dreieich (DE)
(74) Vertreter: Müller Schupfner & Partner Patent- und Rechtsanwaltspartnerschaft mbB

(56) Entgegenhaltungen:
- EP-A1- 2 924 313
- WO-A1-2004/094858
- DE-A1- 2 217 009
- DE-A1- 10 200 455
- DE-B3-102011 111 837
- DE-C2- 1 066 820
- US-A1- 2004 200 678

## Beschreibung

Die vorliegende Erfindung bezieht sich auf eine Bremsscheibe, insbesondere für Nutzfahrzeuge, sowie auf ein Bremssystem.

Einen Schwerpunkt bei der Entwicklung von Scheibenbremsen bildet deren Wärmemanagement. So wird, wie bei allen Reibungsbremsen, auch bei Scheibenbremsen die kinetische Energie des Fahrzeugs beim Bremsvorgang vollständig in Wärme umgewandelt. Diese Wärmeenergie wird zunächst hauptsächlich in der Bremsscheibe gespeichert, wodurch sich diese erwärmt. Zur besseren Wärmeabfuhr ist es aus dem Stand der Technik bekannt, Scheibenbremsen innen zu belüften. Damit wird die Fläche zur Abgabe der Wärme an die Luft vergrößert und bei einer Rotation der Bremsscheibe durch die Zentrifugalkraft ein Luftstrom erzeugt. Als Nachteile können die größere Baubreite und das höhere Gewicht genannt werden. Bekannt ist es auch, Lochungen vorzusehen, um den Wärmeeintrag beim Bremsen besser beeinflussen zu können. In der Regel geht dies aber mit einem erhöhten Belagverschleiß einher. Auch Schlitzungen auf der Scheibenoberfläche sind möglich, um eine bessere Belüftung und einen verbesserten Abtransport von Nässe zu erzielen.

Tatsächlich konnte bislang aber noch keine Konfiguration gefunden werden, welche höchstmögliche Standfestigkeit mit ausgezeichnetem thermischen Verhalten verbindet.

Die DE 2 217 009 A1 befasst sich mit Bremsscheiben mit konzentrisch in Umfangsrichtung verlaufenden geschlossenen Nuten, wobei Bremsbeläge einen beim Bremsen jeweils in die Nuten eingreifenden ringförmigen Vorsprung bilden sollen. Die DE 1 066 820 C2 offenbart Bremstrommeln oder Bremsscheiben, deren Bremsfläche durch in der Umfangsrichtung verlaufende geschlossene Nuten in kleinere Ringflächen unterteilt ist.

Die WO 2004/094858 A1 befasst sich mit Bremsrotoren, welche eine Brücke zwischen einem zentralen Anschlussbereich und einem inneren Durchmesser einer ringförmigen Bremsfläche aufweist, wobei eine Vielzahl von Rippen in der Umgebung der Brücke positioniert sind.

Die EP 2 924 313 A1 befasst sich mit Verschleißindikatoren von Bremsscheiben.

Die DE 10 2011 111 837 B3 betrifft eine innenbelüftete Bremsscheibe, mit einem ersten Reibring an ihrem Außendurchmesser und eine, auf einen zweiten Reibring ausgerichtete, Prellkante.

Die US 2004/0200678 A1 offenbart einen Bremsenrotor mit Nuten.

Es ist daher Aufgabe der vorliegenden Erfindung, eine Bremsscheibe, insbesondere für Nutzfahrzeuge, einen Bremsbelag sowie ein Bremssystem anzugeben, welche die vorgenannten Nachteile beseitigen und welche standfest und höchst belastbar sind.

Diese Aufgabe wird durch eine Bremsscheibe gemäß Anspruch 1 sowie durch ein Bremssystem gemäß Anspruch 13
gelöst. Weitere Vorteile und Merkmale ergeben sich aus den Unteransprüchen sowie der Beschreibung und den beigefügten Figuren.

Erfindungsgemäß umfasst eine Bremsscheibe, insbesondere für Nutzfahrzeuge, eine Reibscheibe, welche eine Reibfläche aufweist, wobei die Reibscheibe zumindest eine Vertiefung umfasst, welche an der Reibfläche eine, insbesondere geschlossene, Kontur formt, und wobei innerhalb der Kontur zumindest eine Ausnehmung vorgesehen bzw. angeordnet ist. Durch eine Positionierung von Ausnehmungen, gerade in den Vertiefungen bzw. innerhalb deren Kontur(en), kann vorteilhafterweise einem erhöhten Belagverschleiß entgegengewirkt werden, da verhindert wird, dass die Ausnehmungen mit dem Bremsbelag in Kontakt kommen. Durch die Positionierung der Vertiefung bzw. mehrerer Vertiefungen sowie der zumindest einen Ausnehmung kann gezielt Einfluss auf das Hitzeriss- und Schirmverhalten der Bremsscheibe genommen werden. Insbesondere ermöglicht das Vorsehen sowohl der Vertiefungen als auch der Ausnehmungen, dass die Oberfläche der Reibscheibe vergrößert wird, um so die mögliche Wärmeabstrahlung zu erhöhen. Durch die spezifische Lage der Ausnehmungen relativ zu den Vertiefungen wird aber zusätzlich erreicht, dass die Bremsscheibe äußerst standfest ist. Ermöglicht wird dies insbesondere dadurch, dass die Ausnehmung(en) innerhalb der Kontur der jeweiligen Vertiefung angeordnet ist/sind und die Kontur, insbesondere deren Verlauf, nicht "gestört" oder "unterbrochen" wird. Vorteilhafterweise ist die Reibscheibe als Reibring ausgebildet.

Erfindungsgemäß weist die Ausnehmung bzw. die zumindest eine Ausnehmung einen Rand auf, wobei der Rand die Kontur nicht berührt oder scheidet. Mit anderen Worten liegt die Ausnehmung vollständig in bzw. innerhalb der Vertiefung. Die üblicherweise auftretende Erhöhung des Belagverschleißes wird damit erfolgreich vermieden. Der vorgenannte Rand kann ebenfalls als "Kontur" interpretiert werden. Es handelt sich um die Kontur, die die Ausnehmung an einer entsprechenden Oberfläche der Reibscheibe formt.

Gemäß einer Ausführungsform weist die Vertiefung einen Seitenabschnitt und einen Bodenabschnitt auf, wobei die Ausnehmung bevorzugt im Bodenabschnitt angeordnet/vorgesehen ist. Wie bereits erwähnt, schneiden oder berühren die Ausnehmungen die Konturen der Vertiefungen nicht. Die Ausnehmungen müssen aber deswegen nicht ausschließlich auf den Bodenabschnitten angeordnet sein. Insbesondere wenn die Seitenabschnitte schräg (ungleich 90° zur Reibfläche) verlaufen, können sich die Ausnehmungen auch in die Seitenabschnitt hinein erstrecken.

Gemäß einer bevorzugten Ausführungsform weist die Ausnehmung insbesondere die Form eines Langlochs auf, wobei sich das Langloch bevorzugt entlang der Vertiefung erstreckt. Zweckmäßigerweise ist die Ausnehmung auch als (kreisrundes) Loch oder als Bohrung ausgebildet. Ein derartiges (Lang-)Loch kann gebohrt sein, aus Stabilitätsgründen ist es aber auch vorteilhaft, wenn es bereits bei der Herstellung der Bremsscheibe selbst (mit-)gegossen wird. Im Übrigen können die Ausnehmungen auch unterschiedliche Querschnittsformen aufweisen. Eine Breite der Ausnehmung (in radialer Richtung) liegt gemäß verschiedenen Ausführungsformen beispielsweise in einem Bereich von etwa 1 bis 15 mm, bevorzugt in einem Bereich von etwa 2 bis 10 mm. Die Länge (in Umfangsrichtung) liegt bei etwa 5 bis 60 mm, beispielsweise 5 bis 30 mm. Da die Umfangsgeschwindigkeiten der Bremsscheibe mit zunehmendem Radius ansteigen, hat es sich als vorteilhaft erwiesen, dass die Ausnehmungen nach außen, bezogen auf eine Drehachse der Bremsscheibe und damit dort, wo der Wärmeeintrag aufgrund der hohen Umgangsgeschwindigkeiten am größten ist, umso größer, insbesondere länger, ausgebildet sind. Besonders vorteilhaft kann es sein, wenn die Ausformung der Ausnehmung, insbesondere des Langlochs, so gestaltet wird, dass eine Sogwirkung bzw. einen Luftstrom durch das Langloch erzeugt oder begünstigt werden. Dies kann beispielsweise erreicht werden, indem das Langloch z. B. dreidimensional ausgeformt wird. Die Geometrie der Ausnehmung ist senkrecht zur Reibfläche dann beispielsweise nicht konstant sondern weist z. B. Querschnittsveränderungen (Verkleinerungen oder Vergrößerungen) auf.

Zweckmäßigerweise erstreckt sich die Ausnehmung im Wesentlichen senkrecht zur Reibfläche und durchdringt diese bevorzugt vollständig. Damit kann die mögliche Wärmeabstrahlung maximiert werden, da die Oberfläche so bestmöglich maximiert wird. "Im Wesentlichen senkrecht" umfasst hierbei eine Neigung der Längserstreckung der Ausnehmung zur Reibfläche von etwa 85° bis 95°. Gemäß einer alternativen Ausführungsform durchdringt die Ausnehmung die Reibscheibe aber nicht vollständig sondern nur zu 10, 20, 50, 60, 80 oder 90 %. Besonders bevorzugt durchdringt die Ausnehmung die Reibscheibe zu 30% bis 40%. Hierdurch wird eine Vertiefung geschaffen, welche besonders im Hinblick auf Wärmeabstrahlung einen guten Kompromiss zwischen Standfestigkeit und Wärmeabfuhr bietet.

Erfindungsgemäß ist die Vertiefung eine Rille, welche einen geschlossenen Ring, insbesondere einen Kreisring, formt, wobei in einer radialen Richtung der Bremsscheibe bevorzugt eine Vielzahl von Rillen vorgesehen ist bzw. wobei entlang der Rille bevorzugt eine Vielzahl von Ausnehmungen angeordnet ist. Ganz allgemein weist die Reibfläche bevorzugt eine Vielzahl von Vertiefungen auf. Ein Querschnitt der Rille ist zweckmäßigerweise kreissegmentförmig, rechteckig, quadratisch oder trapezförmig etc. Eine Tiefe der Rille beträgt zweckmäßigerweise 2 bis 7 mm, bevorzugt etwa 3 bis 6 mm. Ein Verhältnis einer Tiefe der Rille zur Dicke der Reibscheibe liegt gemäß verschiedener Ausführungsformen in einem Bereich von etwa 0,1 bis 0,4, bevorzugt auch in einem Bereich von etwa 0,2 bis 0,3. Gemäß einer Ausführungsform sind beispielsweise drei bis zehn Rillen auf der Reibfläche verteilt. Eine Breite der Rille, welche sich in radialer Richtung der Bremsscheibe erstreckt, liegt, gemäß verschiedener Ausführungsformen, beispielsweise in einem Bereich von etwa 6 bis 14 mm, bevorzugt in einem Bereich von etwa 12 mm. Bei der Auslegung der Breite ist zu berücksichtigen, dass noch eine gute Ausformbarkeit gegeben ist. Ein oder mehrere Ringe können auch, in Umfangsrichtung gesehen, wellen- oder zickzackförmig verlaufen.

Gemäß einer bevorzugten Ausführungsform ist eine Rille vorgesehen, welche in einem Radius von etwa 130 bis 160 mm, insbesondere etwa 155 mm, bezogen auf die Drehachse, angeordnet ist. Die Rille weist bevorzugt 8 bis 12, insbesondere 10 längliche Ausnehmungen/Bohrungen auf, welche in ihr in einem regelmäßigen Abstand verteilt sind. Die Länge der Ausnehmungen beträgt etwa 30 bis 50 mm, die Breite etwa 7 bis 10. Die Rille/Vertiefung ist entsprechend größer ausgebildet, so dass die Ränder der Ausnehmungen deren Kontur nicht scheiden. Gemäß verschiedener Ausführungsformen liegt ein Verhältnis des vorgenannten Radius zu einem (Gesamt-)Radius der Reibscheibe in einem Bereich von etwa 0,6 bis 0,9. Damit kann eine gute Kühlung bei gleichzeitig hoher Festigkeit der Reibscheibe erreicht werden, da die Vertiefung weit genug vom Adapterring beabstandet ist.

Gemäß einer Ausführungsform weist die Vertiefung, welche als Rille ausgestaltet ist, einen variablen Querschnitt auf. Mit variablen Querschnitt ist dabei insbesondere gemeint, dass die zumindest eine Rille einen Querschnitt senkrecht zur Erstreckung der Rille aufweist, welcher nicht konstant entlang der Erstreckung der Rille ist. Diese Veränderung des Querschnitts kann dabei beispielsweise durch eine Variation der maximalen/minimalen Tiefe und/oder der maximalen/minimalen Breite erfolgen. Hierdurch wird erreicht, dass die Rotationssymmetrie der Bremsscheibe in einer einfachen Weise zerstört wird, wodurch insbesondere das Komfortverhalten der Bremsscheibe verbessert wird.

Zweckmäßigerweise weist die Bremsscheibe zumindest eine Vertiefung auf, welche sich in radialer Richtung längs einer geraden oder gekrümmten Line erstreckt. Eine solche Vertiefung weist daher einen von seinem Anfang oder Ende aus gesehenen kontinuierlich zunehmenden bzw. abnehmenden Abstand von der Rotationsachse auf. Das Anordnen von radialen Vertiefungen kann dabei durch Ausnutzung der Zentrifugalkraft zum Abtransport von Feuchtigkeit und Verunreinigungen, insbesondere Bremsstaub, genutzt werden. Besonders effektiv lässt sich jedoch mittels dieser Anordnung von Vertiefungen auf das Schwingungsverhalten der Bremsscheibe Einfluss nehmen.

Gemäß einer weiteren Ausführungsform schneidet die zumindest eine radiale Vertiefung, die zumindest eine ringförmige Rille. Insbesondere bei hohen Temperaturen in der Reibpaarung kann durch diese Maßnahme die Auswirkung von Fading reduziert werden, was eine höhere Sicherheit der Bremse gewehrleistet.

Bevorzugterweise weist die Reibscheibe eine der bereits genannten Reibfläche gegenüberliegende weitere Reibfläche auf, welche ebenfalls zumindest eine Vertiefung aufweist, wobei die Vertiefung vorteilhafterweise derart positioniert oder dimensioniert ist, dass die Ausnehmung auch innerhalb deren Kontur angeordnet ist. Zweckmäßigerweise sind die Vertiefungen auf den gegenüberliegenden Reibflächen also derart angeordnet, insbesondere bezogen auf die radiale Richtung zur Drehachse, dass ein und dieselbe Ausnehmung auf beiden Reibflächen innerhalb der Konturen der Vertiefungen angeordnet ist. Die Reibflächen sind also bevorzugt gleich ausgebildet.

Ferner bevorzugt weist die Reibfläche oder die Reibflächen eine Vielzahl von kreisringförmigen Vertiefungen auf, welche bevorzugt konzentrisch angeordnet sind. Hierdurch wird eine besonders kostengünstige Fertigung erreicht. In einer alternativ bevorzugten Variante sind die kreisringförmigen Vertiefungen nicht konzentrisch auf der oder den Reibflächen angeordnet. Hierdurch kann in einer einfachen Weise die Rotationssymmetrie der Bremsscheiben verhindert/reduziert werden, sodass eine Separation von Schwingungsmoden erzielt wird.

An dieser Stelle sei erwähnt, dass es sich bei der Bremsscheibe gegebenenfalls auch um eine innenbelüftete Bremsscheibe handeln kann. In diesem Fall würde die Bremsscheibe zwei Reibscheiben umfassen, welche jeweils mit einer entsprechenden Reibfläche versehen sind, wobei die Reibscheiben bevorzugt über eine Vielzahl von Stegen verbunden sind, um ein Belüftungssystem zu formen/bilden. Tatsächlich ermöglicht die hier beschriebene Bremsscheibe bzw. die Ausgestaltung deren Reibscheibe(n)/Reibfläche(n) insbesondere, auf eine Innenbelüftung zu verzichten. Die Fertigung kann also erheblich vereinfacht werden, da z. B. keine Hinterschneidungen mehr notwendig sind. Bei den Vertiefungen kann es sich auch um Rillen handeln, welche lediglich kreisbogenförmig verlaufen, also keinen geschlossenen Kreis bilden. In Rotationsrichtung und/oder quer dazu kann eine Vielzahl derartiger Rillen vorgesehen sein. Alternativ oder zusätzlich können ein oder mehrere Rillen auch im Wesentlichen gerade verlaufen, wobei die "Gerade" nicht durch die Drehachse verläuft sondern schräg zu dieser angeordnet ist.

Gemäß einer Ausführungsform weist die Vertiefung den Bodenabschnitt auf, wobei die Reibscheibe im Bereich des Bodenabschnitts bevorzugt einen Vorsprung oder Absatz aufweist, welcher gegenüber dem Bodenabschnitt versetzt oder erhaben ausgebildet ist und z. B. als Verschleißanzeiger wirkt. Der tiefste Punkt der Vertiefung liegt zweckmäßigerweise also unterhalb eines Mindestverschleißmaßes der Reibscheibe und es kann in der Vertiefung/Rille, beispielsweise eine Erhöhung eingebracht werden, die ähnlich wie bei einem Autoreifen auf das Erreichen des Verschleißmaßes hinweist.

Gemäß einer Ausführungsform weist die Bremsscheibe eine Vielzahl von Ausnehmungen sowie eine Vielzahl von Eingriffsbereichen auf, über welche ein Adapterring angeordnet oder anordenbar ist, wobei die Eingriffsbereiche in Umfangsrichtung der Bremsscheibe/Reibscheibe versetzt zu den Ausnehmungen positioniert sind. Der Adapterring weist eine Vielzahl von Zähnen auf, welche ausgelegt sind, insbesondere formschlüssig, in die Eingriffsbereiche einzugreifen. Derart ausgebildete Reibscheiben weisen sehr gleichmäßige Wandstärken auf, was deren Festigkeit, Bremsverhalten und Dauerhaltbarkeit zugutekommt. Der Adapterring dient der Anordnung der Bremsscheibe z. B. an einem Radträger. Zweckmäßigerweise ist der Adapterring in die Reibscheibe z. B. eingegossen.

Die Positionierung des oder der Zähne des Adapterrings erfolgt gemäß einer Ausführungsform außermittig in Bezug auf eine Wandstärke/Dicke des Reibrings, um auf der Seite des Adapterrings, die auf Grund ihrer Geometrie kritischer ist, eine größere Wandstärke und damit mehr Robustheit zu bieten.

Die Erfindung bezieht sich auch auf einen Bremsbelag für eine erfindungsgemäße Bremsscheibe, umfassend eine Bremsfläche, welche zumindest eine Aussparung aufweist, wobei die Aussparung derart dimensioniert bzw. positioniert ist, dass im Betrieb, beim Anlegen des Bremsbelags an der Reibfläche, die Bremsfläche, die zumindest eine Vertiefung nicht überdeckt oder überstreicht. Die Aussparung kann als Vertiefung oder Rücksprung in dem Bremsbelag ausgebildet sein. Alternativ oder zusätzlich kann der Bremsbelag auch mehrere Belagelemente umfassen, welche derart beabstandet zueinander angeordnet sind, dass entsprechende Aussparungen dazwischen gebildet werden. Die Elemente können z. B. rechteckig, dreieckig, sechseckig, rund, oval etc. ausgebildet sein. Die Belagmasse kann auch streifenförmig auf den entsprechenden Belagträger aufgebracht sein. Entscheidend ist, dass die Aussparungen so dimensioniert und positioniert sind, dass beim Anlegen, also beim eigentlichen Bremsvorgang, die zumindest eine Vertiefung an der Reibfläche der Bremsscheibe nicht überdeckt wird, sodass vorteilhafterweise ein Verkanten des Bremsbelags vermieden wird.

In einer Ausführungsform besteht das Reibmaterial des Bremsbelags, welches dafür bestimmt ist mit der Bremsscheibe in Kontakt zu treten, zu zumindest 15% aber zu nicht mehr als 62% seines Gesamtgewichts aus Stahl besteht. Hierdurch wird sichergestellt, dass eine besonders gute Wärmeabfuhr mit guten tribologischen Eigenschaften kombiniert wird. Besonders bevorzugt ist es, wenn der Anteil von Stahl im Reibmaterial maximal 35% des Gesamtgewichts des Reibmaterials beträgt. Hierdurch wird erreicht, dass der Verschleiß der Bremsscheibe reduziert wird.

Bevorzugt weist der Bremsbelag eine Zwischenschicht zwischen der Trägerplatte und dem Reibmaterial auf, wobei die Zwischenschicht eine im Vergleich zu dem Reibmaterial höhere Materialdämpfung aufweist. Die Trägerplatte ist ein Bestandteil des Bremsbelags, der dazu ausgelegt ist, das Reibmaterial direkt oder indirekt zu tragen. Durch die Zwischenschicht wird erreicht, dass die Auswirkungen von Resonanzen minimiert werden.

Die Erfindung bezieht sich auch auf ein Bremssystem, insbesondere für Nutzfahrzeuge, umfassend zumindest eine erfindungsgemäße Bremsscheibe und zumindest einen erfindungsgemäßen Bremsbelag. Vorteilhafterweise kann die vorgenannte Bremsscheibe aber auch mit konventionellen "flachen" Bremsbelägen verwendet werden.

Weitere Vorteile und Merkmale ergeben sich aus der nachfolgenden Beschreibung bevorzugter Ausführungsformen der erfindungsgemäßen Bremsscheibe sowie des erfindungsgemäßen Bremsbelags mit Bezug auf die beigefügten Figuren. Einzelne Merkmale der einzelnen Ausführungsformen können dabei im Rahmen der Erfindung miteinander kombiniert werden.

Es zeigen:
- Figur 1: eine teilweise Draufsicht auf eine Ausführungsform einer Bremsscheibe mit einer dort skizzierten Schnittansicht;
- Figur 2: eine teilweise Draufsicht auf eine Ausführungsform einer Bremsscheibe mit einer dort skizzierten Schnittansicht.

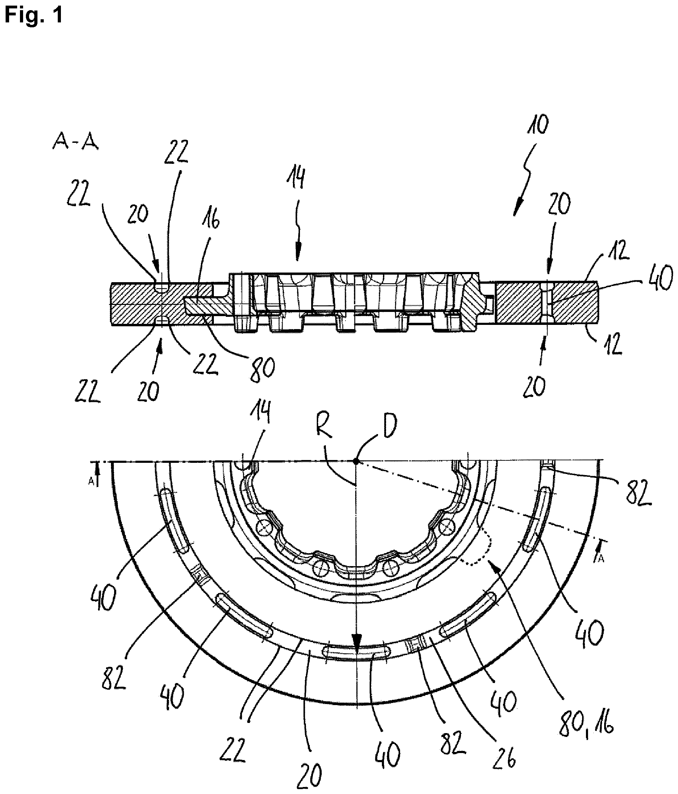

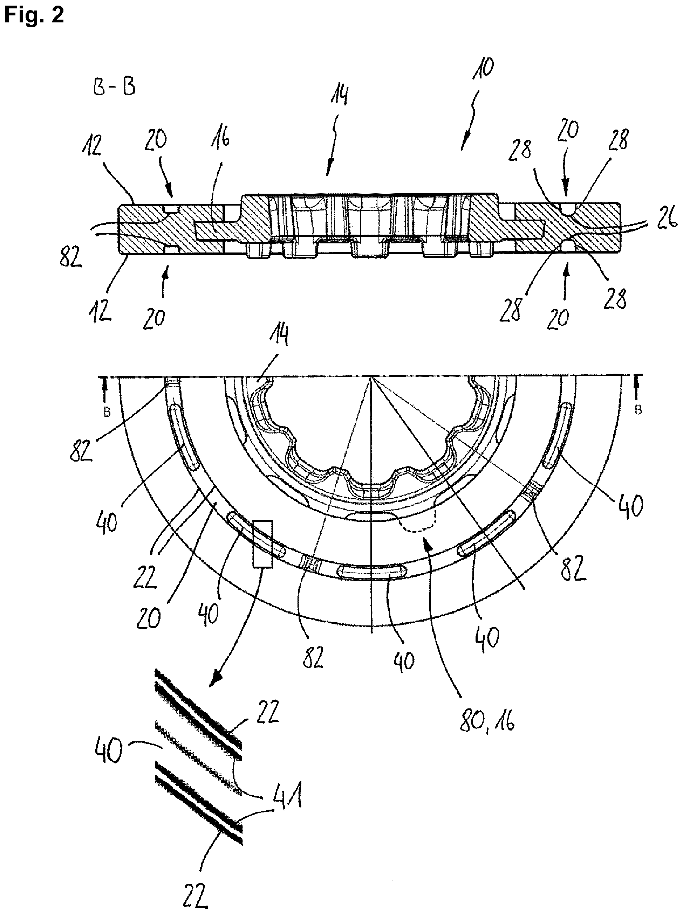

**Fig. 1** zeigt in der oberen Bildhälfte einen Schnitt A-A, welcher in der unteren Bildhälfte skizziert ist. In dem Schnitt ist ein Reibring 10 eine Bremsscheibe, umfassend zwei gegenüberliegende Reibflächen 12, zu erkennen. Ein Adapterring 14, welcher der Anordnung der Reibscheibe 10, beispielsweise an einem hier nicht dargestellten Radträger dient, ist in entsprechenden Eingriffsbereichen 80 des Reibrings 10 angeordnet/befestigt, beispielsweise eingegossen. Hierzu weist der Adapterring 14 eine Vielzahl von Zähnen 16 auf, wobei einer dieser Zähne 16 und dessen Anordnung im Eingriffsbereich 80 in dem Schnitt zu sehen sind. Zu erkennen ist weiter an jeder Reibfläche 12 eine im Wesentlichen halbkreisförmige (bezogen auf deren Querschnitt) Vertiefung 20, welche an den Reibflächen 12 Konturen 22 formen. Der Schnitt läuft derart, dass eine Ausnehmung 40 zu sehen ist, die innerhalb der Kontur 22 der gegenüberliegenden Vertiefungen 20, angeordnet ist bzw. verläuft. In der unteren Bildhälfte ist die halbe Reibscheibe 10 in der Draufsicht zu erkennen, sodass der Verlauf der im Wesentlichen kreisringförmigen durchgehenden Vertiefung 20, welche zwei Konturen 22 formt, zu sehen ist. Die Vertiefungen 20 umfassen Seitenabschnitte und Bodenabschnitte, welche aus Übersichtlichkeitsgründen hier aber nicht mit Bezugszeichen versehen sind, vgl. aber Figur 2. Entlang bzw. innerhalb der Konturen 22 ist eine Vielzahl von im Wesentlichen länglichen Ausnehmungen 40 angeordnet. Insgesamt weist die Reibscheibe 10 z. B. etwa 10 bis 12 derartige Ausnehmungen 40 auf. Die einzige kreisringförmige Vertiefung 20 (bezogen auf die jeweilige Reibfläche 12) ist in einem Radius R zu einer Drehachse D der Reibscheibe 10 beabstandet, wobei ein Verhältnis dieses Radius R zu einem Radius der Reibscheibe 10 etwa in einem Bereich von 0,6 bis 0,9 liegt. Zwischen den Ausnehmungen 40 sind ggf. Erhebungen 82 angeordnet, welche als Verschleißanzeiger wirken. Gestrichelt angedeutet ist einer der Zähne 16, welcher in einem entsprechenden Eingriffsbereich 80 der Reibscheibe 10 angeordnet ist. In der Draufsicht ist zu erkennen, dass die Zähne 16 und die Ausnehmungen 40 in Umfangsrichtung versetzt zueinander positioniert sind, was vorteilhaft für die Festigkeit der Reibscheibe 10 ist, deren Materialstärke auf diese Weise, trotz der Ausnehmungen 40, nicht unzulässig verringert ist.

**Fig. 2** zeigt die im Wesentlichen aus Figur 1 bekannte Ausführungsform einer Reibscheibe 10 einer Bremsscheibe. Ein Schnitt B-B, dargestellt in der oberen Bildhälfte, ist hier allerdings anders geführt und zeigt im linken Bereich eine Erhebung/einen Absatz 82 im Schnitt, welche beispielsweise als Verschleißanzeiger dient. Die Reibscheibe 10 umfasst an jeder ihrer Reibflächen 12 eine Vertiefung 20, welche an den Reibflächen 12 entsprechende Konturen formt, die aus Gründen der Übersichtlichkeit in der oberen Darstellung nicht mit Bezugszeichen versehen sind, vgl. aber Figur 1. Die Vertiefungen 20 umfassen jeweils einen Bodenabschnitt 26 und zwei entsprechende Seitenabschnitte 28. In der hier gezeigten Ausführungsform formen der Bodenabschnitt 26 und die sich daran angrenzenden Seitenabschnitte 28 einen im Wesentlichen halbkreisförmigen Querschnitt, welcher in einer anderen Ausführungsform beispielsweise eckig, insbesondere rechteckig, quadratisch oder trapezförmig, sein kann. Die in der unteren Bildhälfte dargestellte Draufsicht auf einen Teil der Reibscheibe 10 enthält im Wesentlichen keine Änderungen gegenüber der Ausführungsform, die in Figur 1 dargestellt ist und dient in erster Linie dazu, den Verlauf des Schnitts B-B zu verdeutlichen. Hinzuweisen ist aber auf die groß dargestellte Detailansicht einer der Ausnehmungen 40. Zu erkennen ist, dass diese "innerhalb" der Vertiefung 20 angeordnet ist, was insbesondere bedeutet, dass Ränder 41 der Ausnehmung 40 die Konturen 22 der Vertiefung 20 nicht berühren oder gar schneiden.

### Bezugszeichenliste

- 10: Reibscheibe
- 12: Reibfläche
- 14: Adapterring
- 16: Zahn (Adapterring)
- 20: Vertiefung
- 22: Kontur
- 26: Bodenabschnitt/Grund
- 28: Seitenabschnitt
- 40: Ausnehmung
- 41: Rand
- 80: Eingriffsbereich
- 82: Vorsprung, Absatz, Erhebung
- D: Drehachse
- R: Radius

## Patentansprüche

1. Bremsscheibe, insbesondere für Nutzfahrzeuge,
umfassend zumindest eine Reibscheibe (10), welche eine Reibfläche (12) aufweist,
wobei die Reibscheibe (10) zumindest eine Vertiefung (20) aufweist, welche an der Reibfläche (12) eine Kontur (22) formt, und
wobei innerhalb der Kontur (22) zumindest eine Ausnehmung (40) vorgesehen ist,
wobei die zumindest eine Ausnehmung (40) einen Rand (41) aufweist,
und wobei die Vertiefung (20) eine Rille ist, welche einen geschlossenen Ring formt, **dadurch gekennzeichnet dass** der Rand (41) die Kontur (22) nicht berührt oder schneidet.

2. Bremsscheibe nach Anspruch 1,
wobei die zumindest eine Vertiefung (20) einen Seitenabschnitt (28) und einen Bodenabschnitt (26) aufweist, und
wobei die zumindest eine Ausnehmung (40) im Bodenabschnitt (26) angeordnet ist.

3. Bremsscheibe nach einem der vorhergehenden Ansprüche,
wobei die zumindest eine Ausnehmung (40) im Wesentlichen die Form eines Langlochs aufweist.

4. Bremsscheibe nach einem der vorhergehenden Ansprüche,
wobei sich die zumindest eine Ausnehmung (40) im Wesentlichen senkrecht zur Reibfläche (12) erstreckt, und die Reibscheibe (10), bevorzugt vollständig, durchdringt.

5. Bremsscheibe nach einem der vorhergehenden Ansprüche,
wobei entlang der Rille eine Vielzahl von Ausnehmungen (40) angeordnet ist.

6. Bremsschreibe nach Anspruch 5,
wobei die Vertiefung (20), welche als Rille ausgestaltet ist, einen variablen Querschnitt aufweist.

7. Bremsscheibe nach Anspruch 5 oder 6,
wobei sich zumindest eine weitere Vertiefung (20) in radialer Richtung längs einer geraden/ gekrümmten Line der Bremsscheibe erstreckt.

8. Bremsscheibe nach Anspruch 7,
wobei die zumindest eine radiale Vertiefung (20) die zumindest eine ringförmige Rille schneidet.

9. Bremsscheibe nach einem der vorhergehenden Ansprüche,
wobei die Reibscheibe (10) eine der Reibfläche (12) gegenüberliegende weitere Reibfläche (12) aufweist, welche ebenfalls zumindest eine Vertiefung (20) aufweist, und
wobei die Vertiefung (20) derart positioniert oder dimensioniert ist, dass die Ausnehmung (40) auch innerhalb deren Kontur (22) angeordnet ist.

10. Bremsscheibe nach einem der vorhergehenden Ansprüche,
wobei die Reibfläche (12) oder die Reibflächen (12) eine Vielzahl von kreisringförmigen Vertiefungen (20) aufweist, welche bevorzugt konzentrisch angeordnet sind.

11. Bremsscheibe nach einem der Ansprüche 3-10,
wobei die Reibscheibe (10) im Bereich des Bodenabschnitts (26) bevorzugt einen Vorsprung oder Absatz (82) aufweist, welcher gegenüber dem Bodenabschnitt (26) zur Reibfläche (12) hin versetzt ist.

12. Bremsscheibe nach einem der vorhergehenden Ansprüche,
umfassend eine kreisringförmige Vertiefung (20) mit einer Vielzahl von Ausnehmungen (40), sowie umfassend eine Vielzahl von Eingriffsbereichen (80), über welche ein Adapterring (14) angeordnet oder anordenbar ist,
wobei die Eingriffsbereiche (80) in radialer Richtung versetzt zu den Ausnehmungen (40) positioniert sind.

13. Bremssystem, insbesondere für Nutzfahrzeuge, umfassend zumindest eine Bremsscheibe nach einem der Ansprüche 1-12 und zumindest einen Bremsbelag,
wobei der Bremsbelag eine Bremsfläche umfasst,
welche zumindest eine Aussparung aufweist,
wobei die Aussparung derart dimensioniert bzw. positioniert ist, dass, beim Anlegen des Bremsbelags an der Reibfläche (12), die Bremsfläche die zumindest eine Vertiefung (20) nicht überdeckt.

## Claims

1. Brake disc, in particular for commercial vehicles,
comprising at least one friction disc (10) having a friction surface (12),
wherein the friction disc (10) has at least one recess (20) which forms a contour (22) on the friction surface (12), and
wherein at least one clearance (40) is provided within the contour (22)
wherein the at least one clearance (40) has an edge (41) and wherein the recess (20) is a groove forming a closed ring, **characterized in that** the edge (41) does not touch or cut the contour (22).

2. The brake disc according to claim 1,
wherein the at least one recess (20) has a side portion (28) and a bottom portion (26), and
wherein the at least one clearance (40) is arranged in the bottom section (26).

3. Brake disc according to one of the preceding claims,
wherein the at least one recess (40) substantially has the shape of an oblong hole.

4. Brake disc according to any of the foregoing claims,
wherein the at least one clearance (40) extends substantially perpendicular to the friction surface (12) and penetrates the friction disc (10), in particular completely.

5. Brake disc according to one of the preceding claims,
wherein a plurality of clearances (40) are arranged along the groove.

6. Brake disc according to claim 5,
wherein the recess (20), which is designed as a groove, has a variable cross-section.

7. Brake disc according to claim 5 or 6,
wherein at least one further recess (20) extends in radial direction along a straight/curved line of the brake disc.

8. Brake disc according to claim 7,
wherein the at least one radial recess (20) intersects the at least one annular groove.

9. Brake disc according to any of the foregoing claims,
wherein the friction disc (10) has a further friction surface (12) opposite the friction surface (12), which also has at least one recess (20), and
wherein the recess (20) is positioned or dimensioned such that the clearance (40) is also arranged within its contour (22).

10. Brake disc according to one of the preceding claims,
wherein the friction surface (12) or the friction surfaces (12) have a plurality of circular-ring-shaped recesses (20), which are preferably arranged concentrically.

11. Brake disc according to any one of claims 3-10,
wherein the friction disc (10) preferably has a projection or shoulder (82) in the region of the bottom portion (26), which is offset relative to the bottom portion (26) towards the friction surface (12).

12. Brake disc according to one of the preceding claims, comprising an annular recess (20) with a plurality of clearances (40), and comprising a plurality of engagement portions (80) over which an adapter ring (14) is or can be arranged,
wherein the engagement portions (80) are positioned radially offset from the clearance (40).

13. Brake system, in particular for commercial vehicles, comprising at least one brake disc according to one of claims 1-12 and at least one brake pad,
wherein the brake pad comprises a braking surface,
which has at least one clearance,
wherein the clearance is dimensioned or positioned such that, when the brake lining is applied to the friction surface (12), the braking surface does not cover the at least one recess (20).

## Revendications

1. Disque de frein, en particulier pour véhicules utilitaires, comportant au moins un disque de friction (10) qui présente une surface de friction (12), dans lequel
le disque de friction (10) présente au moins une cavité (20) qui forme un contour (22) sur la surface de friction (12), et
au moins un évidement (40) est prévu à l'intérieur du contour (22),
ledit au moins un évidement (40) présente un bord (41), et
ladite cavité (20) est une rainure qui forme un anneau fermé,
**caractérisé en ce que**
le bord (41) ne touche ou recoupe pas le contour (22).

2. Disque de frein selon la revendication 1,
dans lequel
ladite au moins une cavité (20) présente une portion latérale (28) et une portion de fond (26), et
ledit au moins un évidement (40) est disposé dans la portion de fond (26).

3. Disque de frein selon l'une des revendications précédentes,
dans lequel
ledit au moins un évidement (40) présente sensiblement la forme d'un trou oblong.

4. Disque de frein selon l'une des revendications précédentes,
dans lequel
ledit au moins un évidement (40) s'étend sensiblement perpendiculairement à la surface de friction (12) et traverse le disque de frein (10) de préférence complètement.

5. Disque de frein selon l'une des revendications précédentes,
dans lequel
une multitude d'évidements (40) sont disposés le long de la rainure.

6. Disque de frein selon la revendication 5,
dans lequel
la cavité (20) conçue sous forme de rainure présente une section transversale variable.

7. Disque de frein selon la revendication 5 ou 6,
dans lequel
au moins une autre cavité (20) s'étend en direction radiale le long d'une ligne rectiligne/incurvée du disque de frein.

8. Disque de frein selon la revendication 7,
dans lequel
ladite au moins une cavité radiale (20) recoupe ladite au moins une rainure annulaire.

9. Disque de frein selon l'une des revendications précédentes,
dans lequel
le disque de frein (10) présente une autre surface de friction (12) opposée à ladite surface de friction (12) et présentant également au moins une cavité (20), et
la cavité (20) est positionnée ou dimensionnée de telle sorte que l'évidement (40) est également disposé à l'intérieur de son contour (22).

10. Disque de frein selon l'une des revendications précédentes,
dans lequel
la surface de friction (12) ou les surfaces de friction (12) présente(nt) une multitude de cavités (20) en forme d'anneau circulaire, qui sont disposées de préférence concentriquement.

11. Disque de frein selon l'une des revendications 3 à 10,
dans lequel
au niveau de la portion de fond (26), le disque de frein (10) présente de préférence un ergot ou un talon (82) qui est décalé vers la surface de friction (12) par rapport à la portion de fond (26).

12. Disque de frein selon l'une des revendications précédentes,
comportant une cavité (20) en forme d'anneau circulaire pourvue d'une multitude d'évidements (40) et comportant une multitude de zones d'engagement (80) par lesquelles un anneau adaptateur (14) est disposé ou susceptible d'être disposé,
les zones d'engagement (80) étant positionnées de façon décalée en direction radiale par rapport aux évidements (40).

13. Système de frein, en particulier pour véhicules utilitaires, comportant au moins un disque de frein selon l'une des revendications 1 à 12 et au moins une garniture de frein,
dans lequel
la garniture de frein comprend une surface de freinage qui présente au moins une échancrure,
l'échancrure est dimensionnée ou positionnée de telle sorte que lors de l'application de la garniture de frein contre la surface de friction (12), la surface de freinage ne recouvre pas ladite au moins une cavité (20).
